Europäisches Patentamt

European Patent Office

Office européen des brevets

(11) Publication number: **0 224 617**
**A1**

## (12) EUROPEAN PATENT APPLICATION

(21) Application number: **85307720.4**

(22) Date of filing: **25.10.85**

(51) Int. Cl.4: **B60L 13/10**

(43) Date of publication of application:
**10.06.87 Bulletin 87/24**

(84) Designated Contracting States:
**DE FR GB**

(71) Applicant: **FUJI ELECTRIC CO., LTD.**
**1-1, Tanabeshinden, Kawasaki-ku**
**Kawasaki-shi Kanagawa 210(JP)**
Applicant: **FUJI ELECTRIC CORPORATE**
**RESEARCH AND DEVELOPMENT LTD.**
**2-1, Nagasaka 2-chome**
**Yokosuka-shi Kanagawa-ken(JP)**

(72) Inventor: **Yamamura, Sakae**
**Izumi 2614**
**Komae-shi Tokyo 201(JP)**
Inventor: **Yamaguchi, Hitoshi**
**361-280 Wakamatsu-cho**
**Chiba 280(JP)**

(74) Representative: **Gordon, Martin et al**
**G.F. Redfern & Company Marlborough Lodge**
**14 Farncombe Road**
**Worthing West Sussex, BN11 2BT(GB)**

(54) **Rail for use in magnetic propulsive levitation apparatus.**

(57) A coach member 23 travels on a track member 29 provided with two composite rails 20 arranged to interact with levitation and guide electromagnets 5,6 and with an armature 4 of a linear induction motor. Each composite rail 20 has a trapezium cross-section made up by means of a stack 27 of ferromagnetic plates (to minimise eddy current losses) whose sides form mutually perpendicular lower and lateral sides of the rail 20. A flattened corner portion 28 is provided by a secondary core and conductor of the linear induction motor. Thus the linear induction motor provides a horizontal propulsion force component and a vertical levitation force component so reducing the power consumption needed for the levitation arrangement 5,27.

Fig. 5

## RAIL FOR USE IN MAGNETIC PROPULSIVE LEVITATION APPARATUS

The present invention relates to a rail for use in a magnetic propulsive levitation apparatus for a magnetic levitation railway wherein a coach is supported, guided and propelled in a contact-free manner using electromagnetic forces generated between an electromagnet and an armature of a linear induction motor (hereinafter referred to as a LIM) provided on a coach and on a magnetic rail.

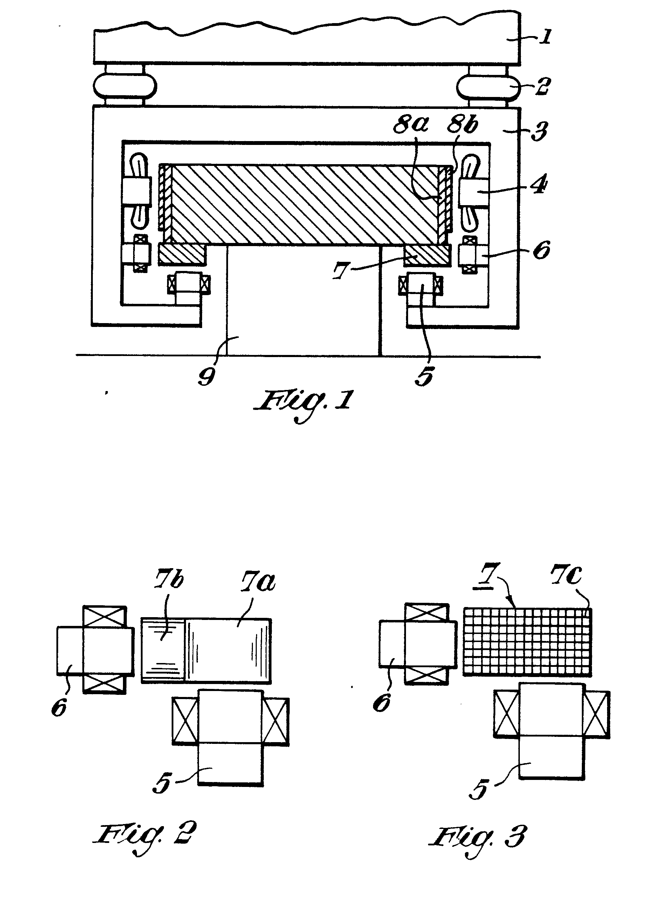

Fig. 1 is a sectional view illustrating an example of constitution of magnetic levitation railway of this kind. In this figure, a coach 1 is shown mounted on a truck 3 by means of a spring arrangement 2. The truck 3 is provided with an armature 4 of a linear induction motor (LIM) for propelling the coach, an electromagnet 5 for supporting the coach and an electromagnet 6 for guiding the coach. At both side surfaces of track 9, a secondary iron core 8a and secondary conductor 8b of the LIM are provided opposite the armature 4 of the LIM and magnetic rails 7 used both for supporting and guiding the coach are provided on both sides of the lower surface of the track 9, with the lower surface of each rail opposed to the electromagnet 5 for levitation and the side surface of each rail opposed to the electromagnet 6 for guidance.

The truck 3 can thus be levitated away from the track 9 by controlling current to the electromagnet 5 and guided to the right and left by controlling a magnetic force between the magnetic rail 7 and said guide electromagnet 6. Simultaneously, the coach is propelled along the track 9 by means of an electromagnetic force generated between the armature 4 and secondary conductor 8b of the LIM through control of the current in the LIM armature.

Propulsive levitation apparatus of this kind is required to be small in size and light weight with low power consumption. The apparatus should ensure excellent tracking ability even over irregular stretches of track by providing the necessary electromagnetic force and electromagnetic spring constant in order to prevent contact with the track during travelling, and to save construction and running costs. Accordingly, the magnetic rail is required to exhibit small losses due to eddy currents generated by the magnetic flux from the levitation and guide electromagnets while the coach is travelling in order to save on construction and maintenance costs. The system as shown in Fig. 1 where the levitation and guide electromagnets are arranged to comprise the salient-pole type so that the N-pole and S-pole are alternately arranged along the direction of travel to meet the requirements mentioned above by minimising inductance and leakage of magnetic flux of the electromagnets, making the electromagnet light in weight and optimising the tracking ability.

In general, when a coach of this type is running on the basis of magnetic levitation, an eddy current loss is produced and a magnetic resistance force is generated relative to the magnetic rail due to the magnetic fields generated by the electromagnets 5 and 6. Particularly in the case of a salient-pole type of electromagnet, since in general the pole pitch is small, the magnetic rail is generally formed by stacking ferromagnetic plates or by combining ferromagnetic wires in order to reduce eddy current losses.

In Fig. 2 there is shown an example of propulsive levitation apparatus in the prior art, wherein a magnetic levitation rail 7a and a guide rail 7b are formed in combination, each rail being formed by stacking ferromagnetic material plates with surfaces opposed to magnetic poles, in order to suppress generation of eddy currents.

In Fig. 3 there is shown an alternative magnetic rail arrangement previously proposed. A magnetic levitation and guide rail 7 is formed by combining wire material 7c, consisting of insulated ferromagnetic material, in order to suppress eddy currents which might be generated in the magnetic rail 7 due to the magnetic fields generated by the electromagnets 5 and 6.

If the magnetic rail 7 employs the layered structure as shown in Fig. 2 two kinds of magnetic rails are required in different stacking directions for levitation and guidance and this results in an increase in the cost of manufacturing the magnetic rail 7. The structure comprising combined wire material shown in Fig. 3 has the disadvantage that a high degree of quality control is required because formation is entirely dependent on the bonding for combining the wire material. Magnetic resistance in the sectional direction becomes high because insulation is necessary between the strands of ferromagnetic material, so that the excitation current levels for the electromagnets must be raised.

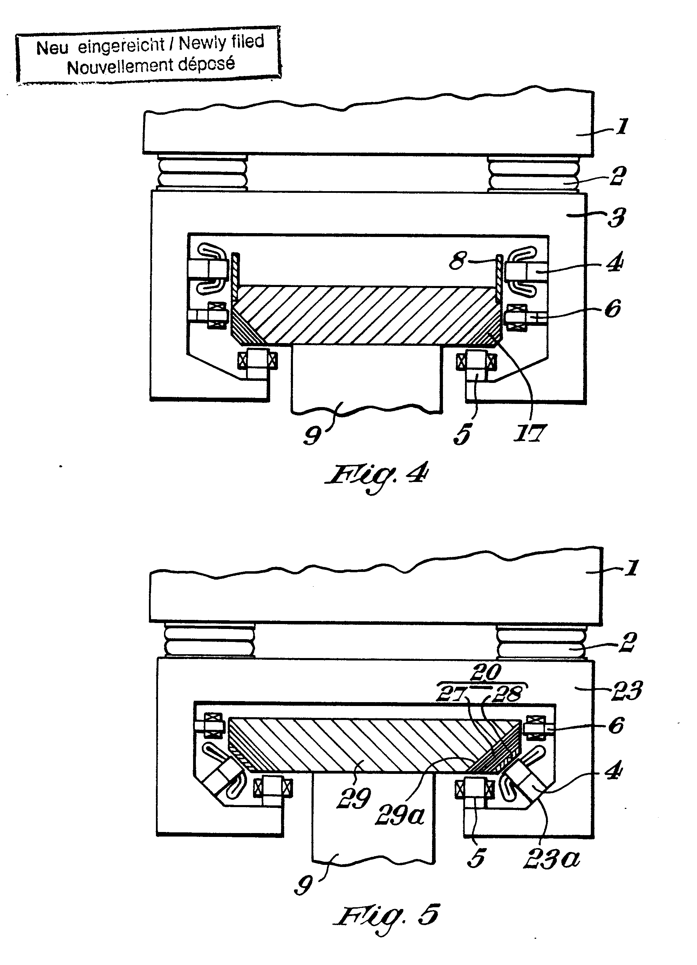

In Fig. 4 there is shown a further example of propulsive levitation apparatus already proposed wherein the track is provided with a layered magnetic rail 17 formed as a layered trapezium in cross-section such that the layered side surfaces are directed downwardly in opposition to a levitation electromagnet 5 and laterally in opposition to a guide electromagnet 6 so that the magnetic rail 17 is used in common both for levitation and guidance. However, a secondary conductor 8 of the LIM is also provided, secured to both side surfaces of the track in such way that the effective surface in the LIM is vertical. This apparatus is intended to improve construction, installation and maintenance costs. The electromagnetic force of the LIM is divided into propulsive (horizontal) and vertical force components. Under ordinary running conditions, the vertical force component becomes an attractive force because sliding is minimal. Therefore, there is a further need for improvement since the vertical force component of the LIM is not used effectively.

According to this invention there is provided a rail for use in propulsive levitation apparatus for use in a magnetic levitation railway and comprising a ferromagnetic core having a tapering four-sided cross-section with two non-adjacent sides being substantially mutually perpendicular and an intervening side of the cross-section providing a flattened corner portion whereby said mutually perpendicular sides can be respectively arranged opposite levitation and guide electromagnets and said flattened corner portion comprising a secondary core and secondary conductor of a linear induction motor so that an armature of the latter can be arranged opposite said flattened corner portion so as to provide both propulsion and levitation force components.

An embodiment of the present invention will now be described, by way of example, with reference to the accompanying drawings in which:-

Fig. 1 is a cross-sectional view of a known basic form of propulsive levitation apparatus;

Figs. 2 and 3 are respective cross-sectional diagrams of different forms of known propulsive levitation apparatus;

Fig. 4 is a cross-sectional view of an already proposed form of propulsive levitation apparatus;

Figs. 5 and 6 are respective cross-sectional views of two different forms of propulsive levitation apparatus embodying this invention;

Fig. 7 is a cross-sectional view on a larger scale of a portion of the apparatus shown in Fig. 5; and

Fig. 8 is a cross-sectional view of a modified form of the portion shown in Fig. 7.

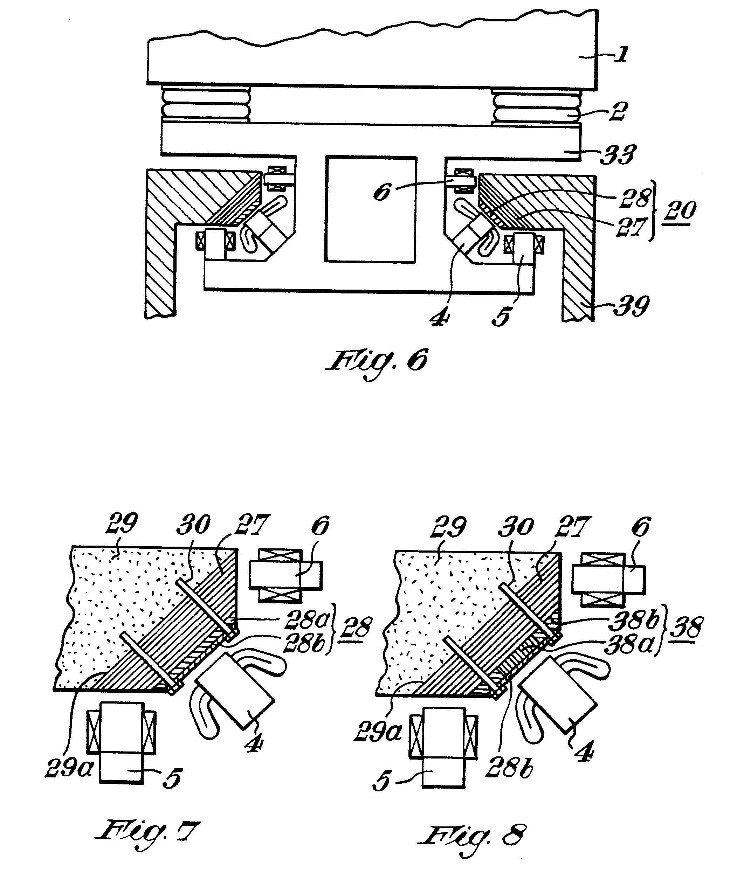

In Fig. 5 there is shown a structure of a magnetic propulsive levitation apparatus having composite magnetic rails 20 each forming a trapezium in cross-section and comprising a magnetic rail 27 consisting of a trapezium cross-section stacked iron core, in close contact with and fixed to, a magnetic rail 28 consisting of a stacked body of secondary conductor and secondary iron core forming a flattened corner portion of the rail. Two such composite magnetic rails are fixed, using fixing means such as bolts, to respective support portions 29a which provide downwardly inclined surfaces at both sides of the track 29.

The trapezium cross-section of the composite magntic rail 20 is such that the mutually inclined sides are at right angles to each other and the inclined surface of the support portion 29a is at 45 degrees to the mutually inclined sides of the trapezium. As a result, the lower side surface of the magnetic rail is substantially horizontal while the lateral side surface of the magnetic rail is substantially vertical and accordingly the end surfaces of the ferromagnetic layers of the magnetic rail 27 are respectively located in the horizontal lower surface and vertical side surface. Therefore if the levitation electromagnet 5 and the guide electromagnet 6 are respectively provided opposite the lower and lateral surfaces of the truck 23, the magnetic flux generated by both electromagnets enters the magnetic rail through the end surfaces of the ferromagnetic layers and forms a loop between the N-pole and S-pole in the direction of travel of the coach.

Thus, the magnetic rail can be used both for levitation and guidance while ensuring that the magnetic flux component passing through the surfaces of the stacked layers is reduced so that magnetic resistance and eddy current losses are reduced. Moreover, the surface of the magnetic rail 28 that is parallel to the base of the latter is inclined downward at an angle of 45 degrees to the horizontal and vertical and therefore the magnetic vertical force component of the LIM can also be used for levitation by fixing the armature 4 of the LIM to an inclined support portion 23a of truck 23 in such a way as to be opposite the surface of the rail 28 and thereby energy that would have been required for levitation can be saved.

The section of composite magnetic rail 20 is not always required to be a trapezium with two parallel sides and it is sufficient when the horizontal lower surface and vertical lateral surface can be obtained with provision of the base to match the inclination of the support portion 29a (i.e. a trapezoidal cross-section which does not have parallel sides).

In Fig. 6 there is shown a modified form of the embodiment shown in Fig. 5. The only difference from the apparatus shown in Fig. 5 is that a track 39 is formed embracing truck 33 and the resulting layout of corresponding components can be easily realised by intechanging the components on the right and left hand sides of the apparatus shown in Fig. 5.

Fig. 7 is a sectional view of a composite magnetic rail of the form used in the embodiments shown in Figs. 5 and 6. In Fig. 7, the common magnetic rail 27 is a so-called bonded iron core formed by ferromagnetic plates such as silicon steel plates or thin iron plates secured together with impregnation of a resin or with a bonding agent. In cross-section the core is formed as a trapezium with the lower surface opposite the levitation electromagnet 5 and the lateral surface opposite the guide electromagnet being at right-angles to each other. The magnetic propulsion rail 28 consists of a layered body, for example, of the secondary iron core 28a of the LIM, consisting of a ferromagnetic plate such as a thick iron plate, and the secondary conductor 28b of the LIM, consisting of aluminium plate.

The composite rail is arranged in close contact with the downwardly inclined surface of the support portion 29a and is fixed to the latter, for example, by means of bolts 30. It is desirable that the bolt 30 is covered with an electrical insulator in order to prevent the formation of a short-circuit. The influence of the protruding portion of the bolts on the gap width between the armature 4 and the secondary conductor 28b can be prevented by locating the bolts 30 outside the area that is opposite the armature 4 of the LIM, as shown in Fig. 7.

The resulting composite magnetic rail 20 has small magnetic resistance and eddy current losses and therefore consumes relatively little energy. Moreover, since the magnetic flux generated by the armature 4 of the LIM passes through the secondary conductor 28b, proceeds through the secondary iron core 28a in the direction of travel of the coach and then returns to the armature again, the flux generates a propulsion force and a supporting lift force on the magnetic rail 29 relative to armature 4. Thus, the vertical force component of the LIM which would otherwise not be used can be used effectively for supporting the coach. The secondary iron core 28a is capable of performing the function of mechanical reinforcing plate by forming said secondary iron core 28a of the LIM using a ferromagnetic plate having high mechanical intensity such as a thick iron plate and fixing the composite magnetic rail 20 to the track by means such as a through-bolt. In this way, greater reliability can be obtained than with the structures in the prior art in which mechanical strength depends on the bonding.

In Fig. 8 there is shown a sectional view of a different form of composite magnetic rail embodying the present invention with the difference from the rail shown in Fig. 7 that a secondary iron core 38 of the LIM is formed as a stacked iron core 38a having an optimum magnetic characteristic in the central area opposite the armature 4 of the LIM and on both sides of said central area the core 38 comprises thick iron plate 38b having a high mechanical strength. The stacked iron core 38a can be obtained by stacking the ferromagnetic plates, such a silicon steel or thick iron plates, with their intefaces at right-angles to the stacking direction of the layers of the magnetic rail 27 (and hence at right-angles to the flattened corner portion of the rail provided by the secondary conductor 28b) and then mutually fixing the ferromagnetic plates by means of impregnation of a resin or using a bonding agent. With such an arrangement, the magnetic flux generated by the armature 4 passes through the secondary conductor 28b and proceeds through the secondary iron core in the direction of travel along the layers. Accordingly, reduction of eddy current losses due to the stacking can be expected and since the iron plate 38b functions as a mechanical reinforcement member, a composite magnetic rail having high mechanical reliability can be obtained.

The composite magnetic rails described above as embodiments of this invention can thus provide levitation, guidance and propulsion. As a result the costs of rail manufacture, track construction and maintenance can be reduced as compared with known arrangements. Moreover, since both the lower surface opposite the levitation electromagnet and the lateral surface opposite the guide electromagnet are formed as common end surfaces of the ferromagnetic plates of the stack, the magnetic flux of both electromagnets passes through the magnetic rail along the stacked layers and the magnetic flux component across the stacked layers is lower than that of conventional structures. Accordingly, eddy current losses and magnetic resistance can be reduced and the power to be consumed for levitation and guidance can also be lowered.

In addition, since a vertical force component of the linear induction motor which was not previously used can be used for assisting in the levitation of the coach by providing the armature of the linear induction motor opposite the downwardly inclined surface of the magnetic rail for propulsion, the excitation power of the levitation electromagnet can be reduced and since the function of the secondary iron core as a reinforcing member of the composite magnetic rail can be achieved by forming the secondary core of the linear induction motor as a thick iron plate, a more reliable magnetic rail than conventional structures dependent on the integrity of adhesive bonding, can be obtained.

Thus the embodiments described above provide a rail for use in propulsive levitation apparatus for use in a magnetic levitation railway and comprising a ferromagnetic core having a tapering four-sided cross-section with two non-adjacent sides being substantially mutually perpendicular and an intervening side of the cross-section providing a flattened corner portion whereby said mutually perpendicular sides can be respectively arranged opposite levitation and guide electromagnets 5 and 6 and said flattened corner portion comprising a secondary core 28a and secondary conductor 28b of a linear induction motor so that an armature of the latter can be arranged opposite said flattened corner portion so as to provide both propulsion and levitation force components.

While the rails described above as embodying this invention each has a cross-section substantially in the form of a trapezium (a quadrilateral with only two sides parallel), the cross-section may be trapezoidal (quadrilateral with no sides parallel) or may comprise a side opposite the flattened corner portion that is convex outwards to allow the stacked ferromagnetic plates to be curved, e.g. circular in cross-section so that the interfaces between the stacked plates can be at right-angles to the lower and lateral surfaces and so aligned with the lines of flux entering from the levitation and guide electromagnets. Clearly the track support portions then need to be concave to receive the convex surfaces of the rails.

## Claims

1. A rail for use in propulsive levitation apparatus for use in a magnetic levitation railway and comprising a ferromagnetic core having a tapering four-sided cross-section with two non-adjacent sides being substantially mutually perpendicular and an intervening side of the cross-section providing a flattened corner portion whereby said mutually perpendicular sides can be respectively arranged opposite levitation and guide electromagnets and said flattened corner portion comprising a secondary core and secondary conductor of a linear induction motor so that an armature of the latter can be arranged opposite said flattened corner portion so as to provide both propulsion and levitation force components.

2. A rail according to claim 1, wherein said rail comprises a stack of ferromagnetic plate layers extending between said mutually perpendicular sides which are formed by the ends of said layers, said secondary core and secondary conductor being mounted on said stack to form the flattened corner portion.

3. A rail according to claim 1 or claim 2, wherein said secondary core comprises a ferromagnetic plate and the secondary conductor comprises a non-magnetic electrically conductive plate.

4. A rail according to claim 1 or claim 2, wherein said secondary core comprises a stack of ferromagnetic plates arranged with their interfaces extending substantially at right-angles to said flattened corner portion.

5. A rail according to claim 4, wherein said secondary core stack has ferromagnetic plate bounding members on either side for gripping and reinforcing the secondary core.

6. A rail according to any one of the preceding claims, wherein bolts extend from the flattened corner portion through the rail whereby the composite rail is held securely together.

7. A rail according to any one of the preceding claims wherein said four-sided cross-section comprises a trapezium cross-section.

8. Magnetic propulsive levitation apparatus for use in a railway and comprising a track member and coach member, one of which carries a composite rail according to any one of the preceding claims, said mutually perpendicular sides of the rail being respectively opposite levitation and guide electromagnets mounted on the other of said members and said flattened corner position being arranged opposite an armature mounted on said other member so as to provide both propulsion and levitation force components.

9. Apparatus according to claim 8, wherein said one member is the track member.

10. Apparatus according to claim 9, wherein said track member has two of said composite rails with said flattened corner portions facing downwardly and outwardly and said coach member embraces said track member.

11. Apparatus according to claim 9 wherein said track member has two of said composite rails with said flattened corner portions facing downwardly and inwardly and said track member embraces said coach member.

12. A magnetic levitation railway including a track and at least one coach provided with apparatus according to any one of claims 8 to 11.

*Fig. 1*

*Fig. 2*

*Fig. 3*

Neu eingereicht / Newly filed
Nouvellement déposé

Fig. 4

Fig. 5

Fig. 6

Fig. 7

Fig. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 144 000 (FUJI) <br> * Page 18, line 7 - page 23, line 15; figures 12-15 * <br><br> ----- | 1-12 | B 60 L 13/10 |
| | | | TECHNICAL FIELDS SEARCHED (Int. Cl.4) |
| | | | B 60 L 13/00 |

The present search report has been drawn up for all claims

| Place of search | Date of completion of the search | Examiner |
|---|---|---|
| THE HAGUE | 04-07-1986 | TIELEMANS H.L.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82